# FASCICULE DE BREVET EUROPEEN

(11) **EP 1 568 091 B1**
(45) Date de publication et mention de la délivrance du brevet: **30.08.2006**
(21) Numéro de dépôt: 03796136.4
(22) Date de dépôt: 02.12.2003
(51) Int. Cl.: H01M 4/86, H01M 8/04

(54) **PILE A COMBUSTIBLE COMPORTANT UNE CATHODE MAGNETIQUE A POMPAGE STATIQUE**
BRENNSTOFFZELLE MIT MAGNETISCHER KATHODE ZUM STATISCHEN PUMPEN
FUEL CELL COMPRISING A MAGNETIC CATHODE WITH STATIC PUMPING

(30) Priorité: 04.12.2002 FR 0215253
(43) Date de publication de la demande: 31.08.2005
(73) Titulaire: COMMISSARIAT A L'ENERGIE ATOMIQUE, 75752 Paris (FR)
(72) Inventeur: MARSACQ, Didier, F-38000 Grenoble (FR); NAYOZE, Christine, F-38600 Fontaine (FR); ROUX, Christel, F-38210 Saint Quentin sur Isere (FR); FRANCO, Alejandro, F-38130 Echirolles (FR)
(74) Mandataire: Jouvray, Marie-Andrée
(86) Numéro de dépôt international: PCT/FR2003/003558
(87) Numéro de publication internationale: WO 2004/054018

(56) Documents cités:
- JP-A- 61 091 876
- JP-A- 2001 205 078
- JP-A- 2002 198 057
- US-A1- 2002 012 821
- WAKAYAMA N I ET AL: "Magnetic promotion of oxygen reduction reaction with Pt catalyst in sulfuric acid solutions" JAPANESE JOURNAL OF APPLIED PHYSICS, PART 2 (LETTERS), vol. 40, 15 mars 2003 (2003-03-15), pages L269-L271, XP001154940 cité dans la demande
- OKADA T ET AL: "The effect of magnetic field on the oxygen reduction reaction and its application in polymer electrolyte fuel cells" ELECTROCHIMICA ACTA, ELSEVIER SCIENCE PUBLISHERS, BARKING, GB, vol. 48, no. 5, 15 janvier 2003 (2003-01-15), pages 531-539, XP004401305 ISSN: 0013-4686

## Description

### Domaine technique de l'invention

L'invention concerne une pile à combustible, générant de l'énergie électrique à partir d'oxygène et d'ions hydronium, et comportant une anode, une cathode magnétique comportant une couche active, un électrolyte protonique entre l'anode et la cathode, et un réseau d'aimants permanents ayant des axes magnétiques perpendiculaires à l'interface entre l'électrolyte et la couche active, les aimants comportant un premier pôle et un second pôle.

### État de la technique

Les piles à combustible sont constituées d'une anode et d'une cathode séparées par un électrolyte liquide ou polymère. Pour certaines applications, notamment l'alimentation en énergie de dispositifs électroniques portables, un des combustibles est l'oxygène de l'air. Les performances d'un tel système sont limitées essentiellement par la cathode et en particulier par la quantité d'oxygène accessible au niveau du catalyseur. L'emploi d'un système de pompage classique augmentant le débit d'oxygène au niveau de la cathode est coûteux en énergie, l'augmentation des performances associée étant alors compensée par l'énergie consommée par le système de pompage.

Il serait intéressant de faire fonctionner la pile à combustible en exploitant au maximum l'oxygène présent dans l'air ambiant sans système de pompage mécanique. Une solution nommée « pompage statique» a été proposée, utilisant les propriétés paramagnétiques de l'oxygène. Le pompage statique est basé sur la force exercée sur un objet paramagnétique par un champ magnétique dans lequel il est situé. Dans un champ magnétique cette force attire l'objet paramagnétique dans la direction dans laquelle la valeur absolue du champ augmente.

L'article « Magnetic Promotion of Oxygen Reduction Reaction with Pt Catalyst in Sulfuric Acid Solutions » de N.I. WAKAYAMA *et Al.* a proposé d'améliorer le fonctionnement d'une pile à combustible par pompage statique (Jpn. J. Appl. Phys. Vol. 40 (2001) pp. L269-L271) en incorporant une poudre de petites particules magnétiques dans une couche active entre une membrane et une électrode de diffusion. Or, cette solution a un effet très faible, parce que les particules magnétiques sont réparties de manière aléatoire sur toute l'épaisseur de la couche active.

Le document JP 2002/198057 décrit une pile à combustible comportant des aimants permanents dispersés dans une des électrodes d'une pile à combustible. Les aimants peuvent être agencés en réseau et les orientations des aimants permanents sont uniformes et parallèles à une ligne reliant les électrodes.

Par conséquent, dans les deux documents précités, la force magnétique résultante est réduite dans les points de l'espace où les champs magnétiques de plusieurs particules ou aimants magnétiques sont opposés. L'oxygène n'est pas attiré par les forces magnétiques pour pénétrer dans tout le volume de la couche active. Le fonctionnement de la couche active est alors amélioré en surface uniquement, tandis que le fonctionnement en volume reste affaibli.

Un autre inconvénient de petites particules magnétiques est la forte corrosion du matériau magnétique dans un milieu acide ou même basique selon le type de pile envisagé.

### Objet de l'invention

L'invention a pour but de remédier à ces inconvénients et en particulier d'augmenter la quantité d'oxygène accessible au niveau de l'ensemble du catalyseur de la couche active cathodique.

Selon l'invention, ce but est atteint par les revendications annexées et, plus particulièrement, par le fait que les premiers et seconds pôles des aimants du réseau sont respectivement disposés dans la couche active et dans l'électrolyte.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 est une représentation d'un mode de réalisation d'une pile à combustible selon l'invention.
La figure 2 illustre les variations de la force magnétique à l'intérieur de la pile.
Les figures 3 et 4 sont des vues en coupe selon l'axe vertical 8 de différents modes de réalisations de la pile selon la figure 1.
La figure 5 représente schématiquement la symétrie d'un autre mode de réalisation particulier d'un réseau d'aimants permanents.

### Description de modes particuliers de réalisation.

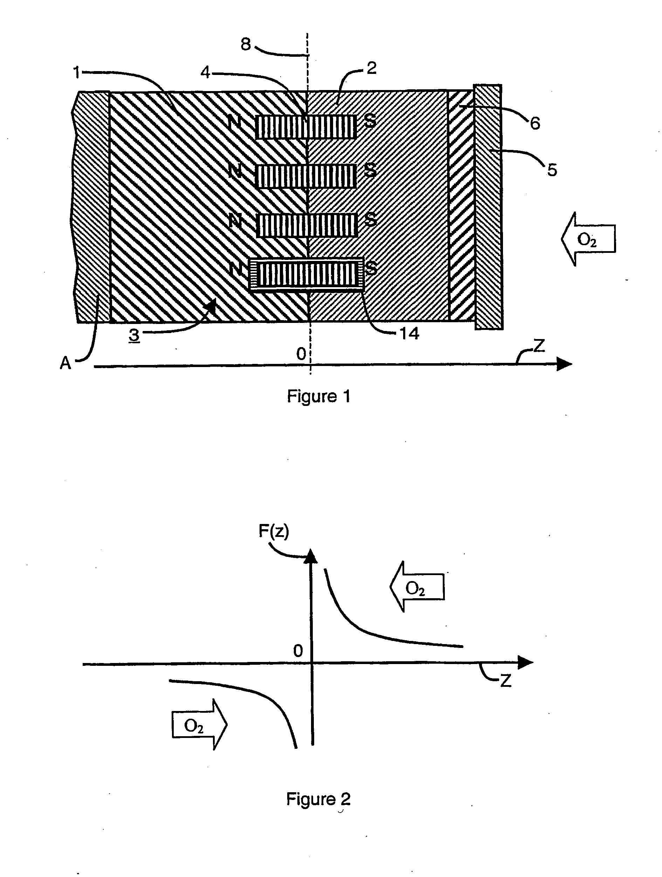

La figure 1 représente une pile à combustible comportant une anode A, un électrolyte 1 protonique et une cathode magnétique comportant une couche active 2, une plaque collectrice 5 de courant électrique poreuse et une couche 6 de diffusion. L'oxygène arrivant par la droite traverse la plaque collectrice 5 et la couche 6 de diffusion de la cathode pour aller dans la couche active. L'hydrogène arrive sous forme d'ions hydronium (usuellement dénommés H⁺), portés par un composé susceptible d'être un vecteur d'hydrogène (alcool, sucre, composé azoté, etc...).

Pour augmenter la diffusion de l'oxygène arrivant dans la couche active 2, la cathode comporte un réseau 3 d'aimants 4 permanents ayant des axes magnétiques perpendiculaires à l'interface entre l'électrolyte et la couche active.

Dans un mode de réalisation préféré, les centres des aimants 4 du réseau 3 d'aimants permanents sont distribués selon une distribution bidimensionnelle. A la figure 1, cette distribution bidimensionnelle est localisée dans le plan parallèle à l'interface entre l'électrolyte 1 et la couche active 2. Les aimants 4 sont, de préférence, aimantés selon l'axe z perpendiculaire au plan de la distribution bidimensionnelle de manière à ce que tous les pôles de polarité nord N soient dans un plan et tous les pôles de polarité sud S soient dans un plan parallèle. Ainsi, des premiers pôles S des aimants 4 du réseau 3 sont disposés dans un premier plan parallèle à l'interface entre l'électrolyte 1 et la couche active 2 et des seconds pôles N des aimants 4 du réseau 3 sont disposés dans un second plan parallèle à l'interface entre l'électrolyte 1 et la couche active 2.

Dans un mode de réalisation préférentiel, les aimants permanents 4 sont semi-entourés par la couche active 2 de manière à ce que tous les pôles (S) d'une seule polarité soient entourés par la couche active 2, tous les pôles de polarité opposée (N) étant entourés par l'électrolyte 1. Ainsi, les premier et second plans sont respectivement disposés dans la couche active 2 et dans l'électrolyte 1. Dans le mode de réalisation représenté à la figure 1, l'interface entre l'électrolyte 1 et la couche active 2 est disposée sensiblement à égale distance des premier et second plans. Les aimants permanents 4 ont, de préférence, des formes identiques et des orientations spatiales identiques, comme représenté à la figure 1.

Dans le mode de réalisation représenté à la figure 1, l'interface entre l'électrolyte et la couche active est située sur un axe vertical 8 et les aimants sont aimantés selon un axe horizontal z. Les aimants créent alors un champ magnétique, dont la valeur absolue est maximale sur l'axe vertical 8. Une force magnétique F(z) attire l'oxygène vers l'axe vertical 8.

Sur la figure 2, la force magnétique F(z) est illustrée en fonction de la coordonnée suivant l'axe horizontal z. La force F(z) augmente en s'approchant de l'axe vertical 8 et change de signe précisément sur l'axe vertical 8, correspondant à un changement de direction de la force. Sur la partie gauche de l'axe 8, l'oxygène est alors attiré vers la droite, tandis que sur la partie droite de l'axe 8, l'oxygène est attiré vers la gauche.

La réaction électrochimique avec l'oxygène a lieu dans la couche active 2 entière. Cette couche doit donc se trouver dans la région où la concentration d'oxygène est maximale. L'oxygène arrivant de la zone de diffusion 6 est attiré dans tout le volume de la couche active par les aimants. En revanche, dans l'électrolyte, l'oxygène est repoussé vers la couche active, de manière à ce que la concentration d'oxygène dans l'électrolyte soit réduite. L'insertion des aimants partiellement dans la couche active et partiellement dans l'électrolyte est optimisée par une répartition des aimants à 50 % dans la couche active et à 50 % dans l'électrolyte.

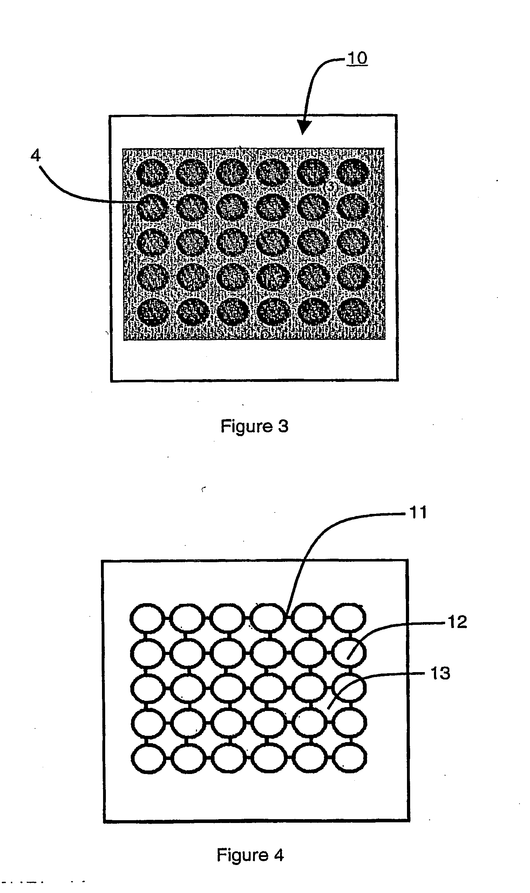

En référence à la figure 3, le réseau d'aimants permanents peut être constitué d'aimants 4 cylindriques répartis selon une distribution bidimensionnelle d'un réseau périodique 10.

Comme représenté à la figure 4, la pile peut comporter un réseau support 11 comportant des orifices 12, dans lesquels peuvent être disposés les aimants 4. Le support comporte des passages 13 pour les ions, notamment les ions hydronium en provenance de l'électrolyte, entre les aimants. Les passages 13 sont donc des zones de points triples où les éléments ions hydronium H⁺, l'oxygène O₂ et les électrons sont en présence ce qui engendre la réaction électrochimique. Le matériau du réseau support 11 peut être un matériau non-magnétique. Le réseau support peut être fixé sur l'électrolyte 1 ou disposé à l'interface entre l'électrolyte 1 et la couche active 2.

La performance de ce système à diffusion améliorée de l'oxygène par un réseau 3 d'aimants 4 dépend de la variation de plusieurs paramètres : l'aimantation, la géométrie et le nombre des aimants 4, l'épaisseur de la cathode et la distribution géométrique des aimants 4 et des passages 13 pour les ions hydronium. Ainsi, avec une distribution plane périodique des centres des masses des aimants 4, comme sur la figure 3, on obtient une amélioration uniforme de la diffusion du gaz dans le catalyseur. On peut également envisager d'autres géométries planes, par exemple triangulaires ou fractales.

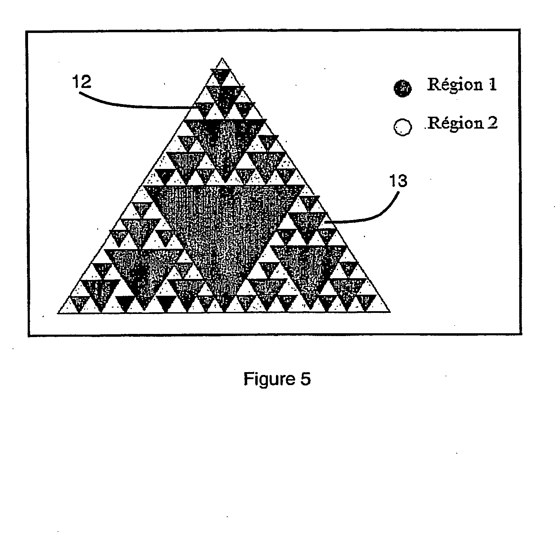

Comme représenté à la figure 5, une distribution des orifices 12 destinés au montage des aimants 4 et des passages 13 dans le réseau support 11 peut constituer une structure fractale, représentée par des triangles de différentes dimensions, un triangle relativement important étant entouré par des triangles plus petits. Les centres des triangles de la figure 5 représentent les centres des aimants. La forme individuelle des aimants eux-mêmes n'est pas nécessairement triangulaire.

Afin d'éviter la corrosion des aimants 4 dans l'électrolyte 1 (acide ou basique), les aimants 4 peuvent être traités contre la corrosion ou comporter des revêtements anti-corrosion (à la figure 1, un des aimants est représenté avec un revêtement 14 anti-corrosion). Le traitement anti-corrosion dépend de la nature de l'électrolyte 1. Le matériau du revêtement est typiquement du platine ou de l'or.

Le réseau 3 d'aimants 4 permanents peut comporter des aimants 4 en matériau ferromagnétique. A titre d'exemple, les aimants 4 permanents peuvent être constitués de matériaux faisant partie des familles de SmCo, AlNiCo, NdFeB ou des Ferrites. Toutefois, l'ensemble des métaux et alliages magnétiques sont envisageables.

Les meilleures performances sont obtenues, si les aimants 4 sont très près de l'oxygène, c'est-à-dire du côté de la cathode. Cependant, une diffusion optimale de l'oxygène dans toute la cathode est obtenue avec le mode de réalisation de la figure 1, dans lequel les centres des aimants 4 sont situés sur l'interface entre la couche active 2 de la cathode -et l'électrolyte 1. Les forces magnétiques augmentent rapidement lorsque la distance entre les aimants 4 et l'oxygène diminue. Ainsi, le réseau 3 d'aimants 4 fonctionne comme un filtre de l'oxygène de l'air, en privilégiant l'oxygène par rapport aux autres gaz présents dans l'air.

Les aimants 4 permanents constituent une source de champ magnétique idéale, fonctionnant seule, sans apport d'énergie externe.

L'invention est plus particulièrement adaptée à la fabrication de mini-piles à combustible. Le réseau 3 d'aimants 4 permet de produire une force magnétique suffisante à une distance de quelques millimètres de la couche active 2. Cela permet d'obtenir une réduction de la surtension de la réaction de réduction de l'oxygène comme l'indique l'exemple suivant : dans le cas d'une pile à combustible comportant un électrolyte solide polymère avec une cathode d'épaisseur voisine de 250µm et un champ magnétique résultant des aimants de 10⁻⁶ teslas, on peut prévoir une diminution dans la surtension de diffusion de l'ordre de 10% à 20%.

## Revendications

1. Pile à combustible, générant de l'énergie électrique à partir d'oxygène et d'ions hydronium, et comportant une anode (A), une cathode magnétique comportant une couche active (2), un électrolyte (1) protonique entre l'anode (A) et la cathode, et un réseau (3) d'aimants (4) permanents ayant des axes magnétiques perpendiculaires à une interface plane entre l'électrolyte (1) et la couche active (2), les aimants (4) comportant un premier pôle (S) et un second pôle (N), pile à combustible **caractérisée en ce que** les premiers (S) et seconds pôles (N) des aimants (4) du réseau (3) sont respectivement disposés dans la couche active (2) et dans l'électrolyte (1).

2. Pile à combustible selon la revendication 1, **caractérisée en ce que** l'interface entre l'électrolyte (1) et la couche active (2) est disposée sensiblement à égale distance des premiers (S) et seconds pôles (N) des aimants (4).

3. Pile à combustible selon l'une des revendications 1 et 2, **caractérisée en ce qu'**elle comporte un réseau support (11), comportant des orifices (12), dans lesquels sont disposés les aimants (4), et des passages (13) pour les ions hydronium et l'oxygène.

4. Pile à combustible selon la revendication 3, **caractérisée en ce que** le réseau support (11) est en matériau non-magnétique, fixé sur l'électrolyte (1).

5. Pile à combustible selon l'une quelconque des revendications 1 à 4, **caractérisée en ce que** les aimants (4) comportent un revêtement anti-corrosion (14).

6. Pile à combustible selon la revendication 5, **caractérisée en ce que** le revêtement anti-corrosion (14) est en platine ou en or.

7. Pile à combustible selon l'une quelconque des revendications 1 à 6, **caractérisée en ce que** les aimants (4) sont distribués dans un plan parallèle à l'interface entre l'électrolyte (1) et la couche active (2) selon une distribution périodique.

8. Pile à combustible selon l'une quelconque des revendications 1 à 6, **caractérisée en ce que** les aimants (4) sont distribués dans un plan parallèle à l'interface entre l'électrolyte (1) et la couche active (2) selon une distribution de type fractale.

## Claims

1. Fuel cell, generating electric power from oxygen and hydronium ions, and comprising an anode (A), a magnetic cathode comprising an active layer (2), a proton electrolyte (1) between the anode (A) and the cathode, and a network (3) of permanent magnets (4) having magnetic axes perpendicular to a plane interface between the electrolyte (1) and the active layer (2), the magnets (4) comprising a first pole (S) and a second pole (N), fuel cell **characterized in that** the first poles (S) and second poles (N) of the magnets (4) of the network (3) are respectively arranged in the active layer (2) and in the electrolyte (1).

2. Fuel cell according to claim 1, **characterized in that** the interface between the electrolyte (1) and the active layer (2) is arranged substantially at equal distance from the first poles (S) and the second poles (N) of the magnets (4).

3. Fuel cell according to one of the claims 1 and 2, **characterized in that** it comprises a support network (11), comprising apertures (12) wherein the magnets (4) are arranged, and passages (13) for the hydronium ions and the oxygen.

4. Fuel cell according to claim 3, **characterized in that** the support network (11) is made of non-magnetic material, fixed onto the electrolyte (1).

5. Fuel cell according to any one of the claims 1 to 4, **characterized in that** the magnets (4) comprise an anti-corrosive coating (14). 1

6. Fuel cell according to claim 5, **characterized in that** the anti-corrosive coating (14) is made of platinum or gold.

7. Fuel cell according to any one of the claims 1 to 6, **characterized in that** the magnets (4) are distributed in a plane parallel to the interface between the electrolyte (1) and the active layer (2) with a periodic distribution.

8. Fuel cell according to any one of the claims 1 to 6, **characterized in that** the magnets (4) are distributed in a plane parallel to the interface between the electrolyte (1) and the active layer (2) with a fractal type distribution.

## Patentansprüche

1. Brennstoffzelle, die auf Basis von Sauerstoff und Hydroniumionen elektrische Energie erzeugt und eine Anode (A), eine magnetische Kathode mit einer aktiven Schicht (2), einen protonischen Elektrolyten (1) zwischen der Anode (A) und der Kathode und ein Netzwerk (3) aus Dauermagneten (4) umfasst, deren magnetische Achsen lotrecht zu einer ebenen Grenzfläche zwischen dem Elektrolyten (1) und der aktiven Schicht (2) verlaufen, wobei die Magneten (4) einen ersten Pol (S) und einen zweiten Pol (N) aufweisen, eine Brennstoffzelle, die **dadurch gekennzeichnet ist, dass** die ersten Pole (S) und die zweiten Pole (N) der Magneten (4) des Netzwerks (3) jeweils in der aktiven Schicht (2) bzw. dem Elektrolyten (1) angeordnet sind.

2. Brennstoffzelle nach Anspruch 1, **dadurch gekennzeichnet, dass** die Grenzfläche zwischen dem Elektrolyten (1) und der aktiven Schicht (2) im Wesentlichen in gleichem Abstand von den ersten (S) und zweiten Polen (N) der Magnete (4) angeordnet ist.

3. Brennstoffzelle nach einem der Ansprüche 1 und 2, **dadurch gekennzeichnet, dass** sie ein Trägemetzwerk (11) mit Öffnungen (12), in denen die Magnete (4) angeordnet sind, und Durchlässe (13) für die Hydroniumionen und den Sauerstoff umfasst.

4. Brennstoffzelle nach Anspruch 3, **dadurch gekennzeichnet, dass** das Trägernetzwerk (11) aus nichtmagnetischem Material besteht, das auf dem Elektrolyten (1) angeordnet ist.

5. Brennstoffzelle nach einem der Ansprüche 1 bis 4, **dadurch gekennzeichnet, dass** die Magnete (4) eine Antikorrosionsbeschichtung (14) umfassen.

6. Brennstoffzelle nach Anspruche 5, **dadurch gekennzeichnet, dass** die Antikorrosionsbeschichtung (14) aus Platin oder Gold ist.

7. Brennstoffzelle nach einem der Ansprüche 1-6, **dadurch gekennzeichnet, dass** die Magnete (4) in einer Ebene, die parallel zur Grenzfläche zwischen dem Elektrolyten (1) und der aktiven Schicht (2) ist, entsprechend einer periodischen Verteilung verteilt sind.

8. Brennstoffzelle nach einem der Ansprüche 1-6, **dadurch gekennzeichnet, dass** die Magnete (4) in einer Ebene, die parallel zur Grenzfläche zwischen dem Elektrolyten (1) und der aktiven Schicht (2) ist, entsprechend einer Fraktalverteilung verteilt sind.
